# EUROPÄISCHE PATENTSCHRIFT

(11) **EP 2 792 442 B1**
(45) Veröffentlichungstag und Bekanntmachung des Hinweises auf die Patenterteilung: **22.08.2018**
(21) Anmeldenummer: 13164133.4
(22) Anmeldetag: 17.04.2013
(51) Int. Cl.: B23F 5/16, B23F 15/06, B23F 21/04

(54) **Wälzschälwerkzeug zum Wälzschälen einer Verzahnung an einem Kronenradwerkstück**
Skiving tool for skiving teeth on a face gear
Outil d'écroutage pour l'écroutage d'une denture sur une pièce à couronne dentée

(43) Veröffentlichungstag der Anmeldung: 22.10.2014
(73) Patentinhaber: Klingelnberg AG, 8050 Zürich (CH)
(72) Erfinder: Vogel, Olaf, 76275 Ettlingen (DE); Nägele, Judith, 76227 Karlsruhe (DE)
(74) Vertreter: Heusch, Christian

(56) Entgegenhaltungen:
- EP-A1- 2 570 217
- DE-A1-102009 003 601
- DE-A1-102010 042 835
- DE-B- 1 049 195
- US-A- 1 472 960

## Beschreibung

### Gebiet der Erfindung

Gegenstand der Erfindung ist ein Wälzschälwerkzeug, das speziell zum Herstellen oder Bearbeiten einer Verzahnung an einem Kronenradwerkstück mittels eines Wälzschälverfahrens ausgelegt. Eine entsprechende Vorrichtung und ein entsprechendes Verfahren ist aus der publizierten Patentanmeldung DE 10 2009 003 601 A1 bekannt.

### Hintergrund der Erfindung, Stand der Technik

Es gibt zahlreiche Verfahren zur Fertigung von Zahnrädern. Bei der spanenden Weichvorbearbettung unterscheidet man Wälzfräsen (im Englischen hobbing genannt), Wälzstossen (im Englischen gear shaping genannt), Wälzhobeln (im Englischen generating planing genannt) und Wälzschälen (im Englischen power skiving genannt). Das Wälzfräsen und Wälzschälen sind sogenannte kontinuierliche Verfahren, wie im Folgenden näher erläutert wind.

Es geht hier um die spanende Bearbeitung von Krenenrädern. Im Zusammenhang mit der vorliegenden Erfindung wird ein Kronenrad als ein Zahnrad betrachtet, dessen Grundkörper eine Ring- oder Scheibenform hat und bei dem im Bereich einer Stirnseite Zähne angeordnet sind. Daher werden solche Zahnräder im Englischen teilweise auch als face gears bezeichnet. Derartige Kronenräder zeichnen sich auch dadurch aus, dass sie mit einem regulären Zylinderrad (im Englischen spur gear genannt) als Ritzel gepaart werden können.

Ein Kronenrad im Sinne der vorliegenden Erfindung hat einen Kopfkegelwinkel (im Englischen face angle genannt), der bei nicht achsversetzten Paarungen dem Achswinkel zwischen der Rotationsachse des Kronenrads und der Rotationsachse des gepaarten Zahnradritzels entspricht. Die vorliegende Erfindung bezieht sich primär auf Kronenräder, bei denen der Kopfkegelwinkel Δ zwischen 60 Grad und 120 Grad beträgt.

Falls der Kopfkegelwinkel des Kronenrads 90 Grad beträgt, nennt man ein solches Zahnrad auch Stirnplanrad.

Eine gute Übersicht über die bereits bekannten Verfahren zum Herstellen von Kronenrädern ist der PCT-Anmeldung WO 2011/017301 A1 zu entnehmen. Weitere beispielhafte Werkzeuge und Verfahren sind bereits aus den folgenden Dokumenten bekannt:
- EP 0699114B1,
- DBP 1074366,
- US 2308891.

Die beiden Dokumente DBP 1074366 und US 2308891 betreffen Verfahren zum Wälzschälen von Kronenrädern. Beim Wälzschälen kommen bisher Werkzeuge zum Einsatz, die eine schneidradartige Form haben. Beim Wälzschälen wird ein solches Werkzeug achsversetzt zum Kronenrad angeordnet, um so kinematisch die für das spanabhebende Verfahren notwendige Schnittkomponente zu erzeugen. Das Werkzeug wird zum Ausbilden eines Zahnes des Kronenrads über die gesamte Zahnbreite bewegt. Es gibt in diesem Zusammenhang unterschiedliche Bewegungsansätze.

Es ist hierbei eine generelle Herausforderung, das Werkzeug und die Bewegung des Werkzeugs so zu gestalten, dass das gewünschte Zahnprofil an allen Stellen entlang der Zahnbreite des Zahnes des Kronenrads in ausreichender Toleranz erzeugt wird. Das Problem entsteht hierbei durch den sich über die Zahnbreite ändernden Eingriffswinkel zusammen mit der notwendigen Achsversetzung des Werkzeugs. Da die Zahnflanke z.B. bei einem geradverzahnten Kronenrad radial verlaufen muss und da ein eingreifendes Ritzel Zahnflanken hat, die parallel zur eigenen Ritzelachse verlaufen, ergibt sich aus dem Strahlensatz, dass der Eingriffswinkel an den Zahnflanken des Kronenrads von aussen nach innen abnehmen muss.

In der Regel stimmen die Achsversetzung der Paarung von Ritzel und Kronenrad nicht mit der Achsversetzung von Werkzeug und Kronenrad bei der Herstellung überein.

Aus den genannten Gründen ergeben sich beim Herstellen der Zahnflanken am Kronenrad nur Näherungslösungen.

Außerdem ist von Bedeutung, dass sich die Schnittbedingungen bei der Verwendung eines schneidradartigen Werkzeugs von außen nach innen (bezogen auf das Werkstück) stark ändern können.

Besonders bei Kronenrädern mit größeren Zahnbreiten, wurden aus diesen Gründen bisher nur unzureichende Ergebnisse erzielt.

Aufgabe der vorliegenden Erfindung ist es, ein Werkzeug zum Bearbeiten der Verzahnung eines Kronenrades bereitzustellen, das genauere Ergebnisse liefert als bisherige Werkzeuge.

Es geht hier um das Herstellen oder Bearbeiten von Kronenrädern, wie eingangs definiert. D.h. es geht allgemein ausgedrückt um das Herstellen oder Bearbeiten der Verzahnungen an einem kronenradartigen Werkstück.

Diese Aufgabe wird gemäß der vorliegenden Erfindung durch ein Werkzeug gemäss Anspruch 1 gelöst, das hier als konisches Wälzschälwerkzeug bezeichnet wird.

Es geht konkret um ein Wälzschälwerkzeug zum Herstellen oder Bearbeiten einer Verzahnung an einem (Kronenrad-)Werkstück mittels eines Wälzschälverfahrens. Das Wälzschälwerkzeug hat einen konischen Grundkörper mit Schneidzähnen, die einer konjugierten Verzahnung der Verzahnung des Kronenrads entsprechen oder von dieser konjugierten Verzahnung abgeleitet sind.

Gemäss Erfindung wird das Wälzschälwerkzeug so in Bezug zu der zu bearbeitenden konischen Verzahnung ausgelegt, dass die Schnittbedingungen beim Wälzschälen über die ganze Zahnbreite der Verzahnung gleichwertig sind. Das erreicht man durch Vorgabe eines geeigneten Konuswinkels des Grundkörpers, durch die Festlegung der Wälzebene am Werkstück und der Anzahl der Schneidzähne (Zähnezahl genannt) und durch die entsprechende Anordnung/Positionierung des Wälzschälwerkzeugs relativ zu der zu bearbeitenden Verzahnung.

Gemäss Erfindung wird vorzugsweise ein konjugierter Zahn einer herzustellenden bzw. einer zu bearbeitenden Zahnlücke der konischen Verzahnung ermittelt (berechnet). Bei diesem konjugierten Zahn handelt es sich vorzugsweise um den Zahn eines virtuellen Ritzels, das optimal mit der konischen Verzahnung des kronenradartigen Werkstücks gepaart ist. Nun werden vorzugsweise mindestens zwei Spanflächenlagen und Schneiden der entsprechenden Spanflächen entlang des ermittelten konjugierten virtuellen Zahnes festgelegt. Auf diesem Wege werden mindestens zwei Schneidkanten im dreidimensionalen Raum definiert.

Je nach Ausführungsform können diese zwei oder mehr als zwei Schneiden einen gleichmäßigen Abstand zueinander haben. Sie können aber auch unterschiedliche Abstände aufweisen. Der Abstand wird hier in Richtung der Zahnbreite des konjugierten virtuellen Zahnes betrachtet.

Entlang des Umfangs der Kegelmantelfläche des konischen Grundkörpers des Wälzschälwerkzeugs werden nun in der theoretischen Betrachtung mehrere konjugierte virtuelle Zähne angeordnet. Bei der konkreten Realisierung des Wälzschälwerkzeugs werden diese konjugierten, virtuellen Zähne nun durch sogenannte Schneidzähne "ersetzt", bzw. in Form von echten Schneidzähnen ausgebildet. Vorzugsweise wird gemäss Erfindung jeder der konjugierten Zähne in Form von einem, zwei oder mehr als zwei echten Schneidzähnen realisiert. Wenn jedoch z.B. nur jeder zweite konjugierte Zahn aus Platzgründen ausgebildet wird, dann bedeutet das, dass nicht jeder konjugierte Zahn als Schneidzahn ausgebildet wird. Es sind somit auch Ausführungsformen möglich, bei denen nicht jeder konjugierte Zahn als Grundlage für einen oder mehrere Schneidzähne dient.

Gemäss Erfindung ergeben sich mehrere Ausführungsformen, die wie folgt unterschieden werden können.
- Jeder konjugierte virtuelle Zahn wird durch nur einen realen Schneidzahn ersetzt, wobei sich die Schneidzähne der einzelnen virtuellen Zähne unterscheiden.
- Jeder konjugierte virtuelle Zahn wird durch nur einen realen Schneidzahn ersetzt, wobei sich die Schneidzähne der einzelnen virtuellen Zähne innerhalb einer Gruppe unterscheiden und die Gruppe sich mehrfach wiederholt.
- Jeder konjugierte virtuelle Zahn wird durch mehrere reale Schneidzähne (z.B. zwei oder drei reale Schneidzähne pro konjugiertem virtuellen Zahn) ersetzt, wobei sich die Schneidzähne der einzelnen virtuellen Zähne unterscheiden.
- Jeder virtuelle Zahn wird durch einen oder mehrere reale Schneidzähne ersetzt, wobei sich die Schneidzähne der einzelnen virtuellen Zähne innerhalb einer Gruppe unterscheiden und die Gruppe sich mehrfach wiederholt;
- Z.B. jeder zweite oder dritte virtuelle Zahn wird durch einen, zwei oder mehr als zwei reale Schneidzähne ersetzt, wobei am Ort der jeweils anderen virtuellen Zähne keine realen Schneidzähne ausgebildet sind.

Der Begriff Schneidzahn bzw. Schneidzähne wird hier sowohl im Zusammenhang mit einstückigen (Voll-)Werkzeugen als auch im Zusammenhang mit Werkzeugen verwendet, die mit Stabmessern bestückt sind. Bei einem Vollwerkzeug der Erfindung sind die Schneidzähne und der Grundkörper, der aus einem Wälzkegelkörper abgeleitet wurde, aus einem Material gefertigt.

Vor allem bei großen Werkzeugen können die Schneidzähne in Form von Stabmessern ausgebildet werden. Hierbei müssen in dem Grundkörper des Werkzeugs, der aus einem Wälzkegelkörper abgeleitet wurde, Kammern (Aufnahmebereiche) vorgesehen sein. Diese Kammern des Grundkörpers müssen nicht alle entsprechend der versetzten Spanflächen auch versetzt zueinander angeordnet sein, da die Stabmesserschaftdicke der Stabmesser über eine bestimmte Breite eine Variation bzw. eine Anpassung der Spanflächenlage zulässt.

Gemäss Erfindung ist davon auszugehen, dass für die Kronenradbearbeitung mit einem solchen Werkzeug eine geringe Anzahl unterschiedlicher Kammerlagen zur Aufnahme der Stabmesser ausreicht.

Es ist ein Vorteil der Erfindung, dass das Werkzeug - wegen des Einsatzes von mehreren Schneiden des Werkzeugs über die Zahnbreite des Werkstücks - zur Ausbildung eines gesamten Zahnes nicht über die gesamte Zahnbreite hinweg bewegt werden muss.

Gemäss Erfindung sind bestimmte Schneiden der Scheidzähne für die Bearbeitung bestimmter Bereiche der Verzahnung gedacht. Sind diese Bereiche klein genug, so sind auch die erzeugten Abweichungen der Zahnflanken zur Sollgeometrie klein.

Gemäss Erfindung liegen die Schneidkanten und Spanflächen des Wälzschälwerkzeugs auf verschiedenen Durchmessern. Das Werkzeug der Erfindung hat also mehrere Schneidebenen.

Gemäss Erfindung sind die Spanflächen der Schneidzähne der Erfindung vorzugsweise bei allen Ausführungsformen nach vorne gerichtet. d.h. die Spanflächen weisen in Richtung der Kegelspitze des kegelstumpfförmigen Grundkörpers des Wälzschälwerkzeugs.

Die Spanflächen der Schneidzähne können gemäss Erfindung jedoch auch in die entgegengesetzte Richtung gerichtet sein. In diesem weniger günstigen Fall weisen die Spanflächen von der Kegelspitze des kegelstumpfförmigen Grundkörpers des Wälzschälwerkzeugs weg.

Gemäss Erfindung können die Spanflächen, die an einem konjugierten Zahn definiert werden, untereinander den gleichen Abstand haben. Der Abstand der Spanflächen kann aber auch unterschiedlich sein.

Gemäss Erfindung kann jeder virtuelle konjugierte Zahn durch mehrere reale Schneidzähne ersetzt werden, wobei sich die Schneidzähne der einzelnen virtuellen Zähne unterscheiden.

Gemäss Erfindung kann jeder virtuelle konjugierte Zahn durch nur einen realen Schneidzahn ersetzt werden, wobei sich die Schneidzähne der einzelnen virtuellen Zähne untereinander unterscheiden.

Gemäss Erfindung kann jeder virtuelle konjugierte Zahn durch nur einen realen Schneidzahn ersetzt werden, wobei sich die Schneidzähne der einzelnen virtuellen konjugierten Zähne innerhalb einer Gruppe unterscheiden und die Gruppe sich entlang des Umfangs des Wälzschälwerkzeugs mehrfach wiederholt.

Gemäss Erfindung kann jeder virtuelle konjugierte Zahn durch einen oder mehrere reale Schneidzähne ersetzt werden, wobei sich die Schneidzähne der einzelnen virtuellen Zähne innerhalb einer Gruppe unterscheiden und die Gruppe sich mehrfach entlang des Umfangs des Wälzschälwerkzeugs wiederholt.

Gemäss Erfindung kann z.B. jeder zweite oder dritte virtuelle Zahn durch einen, zwei oder mehr als zwei reale Schneidzähne ersetzt werden, wobei am Ort der jeweils anderen virtuellen Zähne keine realen Schneidzähne ausgebildet sind.

Mit der vorliegenden Erfindung kann der Tatsache Rechnung getragen werden, dass sich der Eingriffswinkel über die Zahnbreite ändert und deshalb bei achsversetzter Fertigung unterschiedliche Schneidenprofile für eine genaue Fertigung notwendig sind. Durch das Einsetzen von mehreren Schneidzähnen pro Zahnlücke, die zu bearbeiten ist, können lokale Anpassungen am Profil vorgenommen werden.

Die Erfindung ermöglicht ein genaueres Fertigen von Kronenrädern als dies mit herkömmlichen, schneidradartigen Wälzschälwerkzeugen möglich ist.

Die Erfindung ermöglicht ein genaues und zuverlässiges Fertigen von solchen Kronenrädern im Wälzschälverfahren.

### ZEICHNUNGEN

Weitere Einzelheiten und Vorteile der Erfindung werden im Folgenden anhand von Ausführungsbeispielen und mit Bezug auf die Zeichnung beschrieben.
- **FIG. 1A**: zeigt eine schematische Draufsicht einer Paarung aus einem Kronenrad und aus einem Wälzschälwerkzeug der Erfindung, wobei hier nur der konische (kegelstumpfförmige) Grundkörper des Wälzschälwerkzeugs gezeigt ist;
- **FIG. 1B**: zeigt eine schematische Seitensicht der Paarung nach Fig. 1A, wobei nicht nur der Grundkörper des Wälzschälwerkzeugs sondern auch dessen Wälzkegelkörper gezeigt sind;
- **FIG. 1C**: zeigt eine schematische Schnittansicht des konischen (kegelstumpfförmigen) Wälzkegelkörpers des Wälzschälwerkzeugs der Fig. 1B in vergrößerter Darstellung;
- **FIG. 2A**: zeigt eine schematische Perspektivansicht eines einzelnen konjugierten Zahns;
- **FIG. 2B**: zeigt eine schematische Perspektivansicht des konjugierten Zahns nach Fig. 2A, der von zwei Spanflächen geschnitten wird;
- **FIG. 2C**: zeigt eine schematische Perspektivansicht der Kontur des konjugierten Zahns nach Fig. 2A, wobei der konjugierte Zahn in zwei Teilzähne zerteilt wurde;
- **FIG. 3A**: zeigt eine schematische Perspektivansicht einer ersten Ausführungsform eines Wälzschälwerkzeugs der Erfindung, wobei die Konturen der konjugierten Zähne gezeigt sind und das Wälzschälwerkzeug pro konjugiertem Zahn drei Schneidzähne hat;
- **FIG. 3B**: zeigt eine schematische Ausschnittsvergrösserung der Perspektivansicht nach Fig. 3A;
- **FIG. 3C**: zeigt eine Draufsicht des Wälzschälwerkzeugs der Fig. 3A;
- **FIG. 4A**: zeigt eine schematische Perspektivansicht einer zweiten Ausführungsform eines Wälzschälwerkzeugs der Erfindung, wobei das Wälzschälwerkzeug in Zweiergruppen gruppenweise angeordnete Schneidzähne aufweist und wobei jede Zweiergruppe drei Schneidzähne umfasst;
- **FIG. 4B**: zeigt eine schematische Ausschnittsvergrösserung der Perspektivansicht nach Fig. 4A;
- **FIG. 4C**: zeigt eine schematische Perspektivansicht des Wälzschälwerkzeugs der Fig. 4A, wobei hier eine der Gruppen gekennzeichnet ist;
- **FIG. 5A**: zeigt eine Perspektivansicht einer dritten Ausführungsform eines Wälzschälwerkzeugs der Erfindung, das mit Stabmessern ausgestattet ist;
- **FIG. 5B**: zeigt eine Schnittansicht der dritten Ausführungsform nach Fig. 5A;
- **FIG. 6**: zeigt eine Perspektivansicht eines Kronenrads, das gemäss Erfindung durch ein Wälzschälverfahren bearbeitet wurde;
- **FIG. 7**: zeigt eine Perspektivansicht eines einschaligen Hyperboloids, das sich aus einen Schar von Strahlen zusammensetzt.

### DETAILLIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

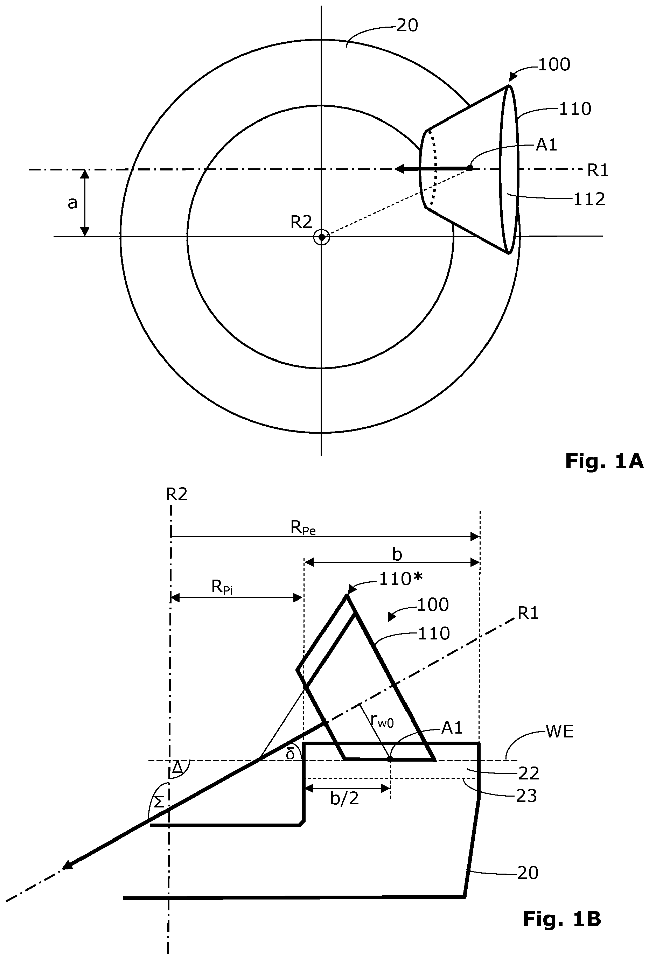

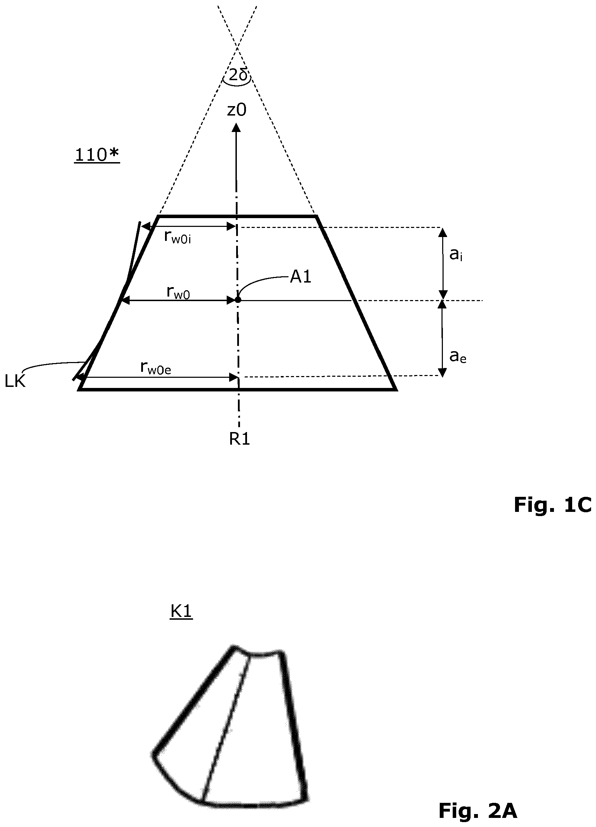

Fig. 1A zeigt eine schematische Draufsicht einer Paarung aus einem Werkstück 20 (hier ein Kronenrad) und aus einem Wälzschälwerkzeug 100 der Erfindung, wobei hier nur der konische Grundkörper 110 des Wälzschälwerkzeugs 100 gezeigt ist. Wie in Fig. 1A gezeigt, wird das Wälzschälwerkzeug 100 mit einer Achsversetzung a in Bezug zum Werkstück 20 angeordnet. Ausserdem ist das Wälzschälwerkzeug 100 leicht geneigt, weshalb man in Fig. 1A die rückseitige Stirnfläche 112 als Oval sieht. Durch geeignete Wahl der Konizität (Teilkegelwinkel δ, siehe Fig. 1B und 1C) des zugehörigen Wälzkegelkörpers 110* wird erreicht, dass die Schnittbedingungen beim Wälzschälen über die ganze Zahnbreite der am Werkstück 20 zu bearbeitenden Verzahnung gleichwertig sind. Das erreicht man unter anderem durch die Vorgabe eines geeigneten Wälzkegelkörpers 110* mit Teilkegelwinkel δ, sowie durch die Festlegung der Wälzebene WE (siehe Fig. 1B) und der Anzahl der Schneidzähne (Zähnezahl genannt) und durch die entsprechende Anordnung/Positionierung des Wälzschälwerkzeugs 100 relativ zu der Verzahnung des Werkstücks 20.

Die bevorzugte Wahl des Kegelwinkels δ des Werkzeug-Grundkörpers 110 wird im Folgenden näher beschrieben. Innerhalb der Wälzebene WE (Bezugsebene) des Kronenrades 20 (Werkstücks) können entlang der Zahnbreitenrichtung (b bezeichnet die Zahnbreite) unterschiedliche Wälzkreise gewählt werden. Diese unterscheiden sich durch ihren jeweiligen Wälzkreisdurchmesser. Für jeden dieser Wälzkreise ergibt sich ein für die Wälzschälbearbeitung optimaler Wälzkreisdurchmesser für das Werkzeug 100. Optimal heißt hierbei, dass die aus der gekoppelten Drehung von Werkstück 20 und Werkzeug 100 resultierende Schnittgeschwindigkeit jeweils in Lückenrichtung der zu bearbeitenden Zahnlücke 22 zeigt.

Fig. 1C zeigt die für drei beispielhaft gewählte Wälzkreise am Werkstück 20 ermittelten optimalen Wälzkreisradien am Werkzeug 100. Diese drei Wälzkreisradien sind mit r_{w0}, r_{w0i} und r_{w0e} bezeichnet. Hierzu wurde der mittlere Wälzkreis mit dem Radius r_{w0} am Werkstück 20 auf Höhe der halben Zahnbreite b/2 gewählt und der äußere und der innere Wälzkreis jeweils um 10% vom Rand eingerückt, das heißt der mittlere Radius liegt dann bei R_{Pi} + b/2, der innere Radius bei R_{Pi}+0,1*b der äußere bei R_{Pe}-0,1*b (vgl. Fig. 1B). r_{w0i} und r_{w0e} sind die Radien des äußeren und des inneren Wälzkreises.

Die in Fig. 1C dargestellten "Pfeilspitzen" der optimalen Wälzkreisradien des Werkzeugs 20 liegen auf einer leicht gekrümmten Linie LK, welche durch eine annähernde Gerade, beispielsweise durch eine Tangente am mittleren Kreis ersetzt werden kann. Auf diese Weise wird der theoretische Grundkörper durch einem kegelstumpfförmigen Wälzkegelkörper 110* angenähert, der ihn in Höhe des Auslegungspunktes A1 berührt. Der Winkel δ ist der Kegelwinkel des Kegelstumpfes, der als Wälzkegelkörper 110* dient (siehe Fig. 1C).

Bei den hier gezeigten und beschriebenen Beispielen gehen wir aufgrund der beschriebenen Annäherung stets von einem Grundkörper 110 mit konstantem Teilkegelwinkel δ aus. Der Achswinkel Σ (siehe Fig. 1B) hängt wie folgt von dem Teilkegelwinkel δ ab: Σ = Δ + δ

Fig. 1B zeigt stark schematisiert eine Seitenansicht der Paarung aus dem Werkstück 20 (hier ein geradverzahntes Kronenrad) und aus dem Wälzschälwerkzeug 100 nach Fig. 1A. Es ist zu beachten, dass in Fig. 1B die Kronenrad-Zahnbreite b bewusst im Verhältnis zur Werkzeuggröße zu groß dargestellt ist. In Fig. 1B ist zu erkennen, dass die Rotationsachse des Werkzeugs R1 schräg nach unten weist und in der gezeigten Projektionsdarstellung einen Achswinkel Σ mit der Rotationsachse R2 des Werkstücks 20 bildet. Es ist zu beachten, dass die Rotationsachse R1 die Rotationsachse R2 nicht schneidet, sondern aufgrund der Achsversetzung a seitlich an der Rotationsachse R2 vorbei läuft und durch die Ebene (Zeichenebene der Fig. 1A) hindurch tritt, die das Werkstück 20 aufspannt. In Fig. 1B ist der Fuß 23 einer Zahnlücke 22 durch eine gestrichelte Linie angedeutet. Die Zähne des Werkstücks 20 haben in dem gezeigten Beispiel eine Zahnhöhe, die entlang der Zahnbreite b konstant ist. Es gilt b = R_{Pe} - R_{Pi} (siehe Fig. 1B). R_{Pi} ist hier der Innenradius des Werkstücks 20 und R_{Pe} ist der Aussenradius, wie in Fig. 1B gezeigt.

Es können somit, wie beschrieben, ein Teilkegelwinkel δ gewählt, sowie die Lage der Wälzebene, die Anzahl der Schneidzähne (Zähnezahl genannt) und die Anordnung/Positionierung (z.B. durch Festlegung/Ermittlung der Achsversetzung a und des Achswinkels Σ) des Wälzschälwerkzeugs 100 relativ zu der Verzahnung des Werkstücks 20 ermittelt werden.

Gemäss Erfindung wird weiterhin eine erste Ermittlung bzw. Berechnung von konjugierten virtuellen Zähnen K (siehe Fig. 2A bis 2C) vorgenommen. Die Fig. 2A bis 2C sind als rein schematische Darstellungen zu verstehen. Durch das Zähnezahlverhältnis, das dem Übersetzungsverhältnis entspricht, und durch die Achsanordnung im dreidimensionalen Raum ist ein räumliches Getriebe festgelegt. Dieses definiert einen zur Werkstücklücke (Zahnlücke 22) konjugierten Zahn, der hier als konjugierter virtueller Zahn K bezeichnet wird. Vorzugsweise wird dann im Auslegungspunkt A1 der Kegelwinkel δ bestimmt, wobei zu berücksichtigen ist, dass das Werkzeug 100 der Erfindung theoretisch keine exakte Kegelgrundform hat, sondern die Form eines Hyperboloids. Bei bevorzugten Ausführungsformen der Erfindung wird jedoch ein kegelstumpfförmiger Wälzkegelkörper 110* in den Hyperboloid eingepasst, wie beschrieben.

Ein konjugierter virtueller Zahn K ist im Sinne der Erfindung die genaue "Konjugation" der Flanken dieses virtuellen Zahnes K mit der Zahnlücke 22 am Werkstück 20.

Bei dem konjugierten Zahn K (in Fig. 2A ist ein Beispiel in schematischer perspektivischer Form gezeigt) oder den konjugierten Zähnen, die hier mehrfach erwähnt werden, handelt es sich um eine Art Hilfsmittel oder Konstrukt, um das Herleiten und die Auslegung der erfindungsgemässen Werkzeuge 100 besser beschreiben zu können. Es gibt auch andere Wege, um diese Herleitung und die Auslegung eines Werkzeugs 100 der Erfindung vorzunehmen.

Das Bezugszeichen K wird allgemein für konjugierte Zähne verwendet. Um einzelne konjugierte Zähne entlang des Umfangs eines Werkzeugs 100 unterscheiden zu können, wird dem K jeweils bei Bedarf eine Ziffer angehängt.

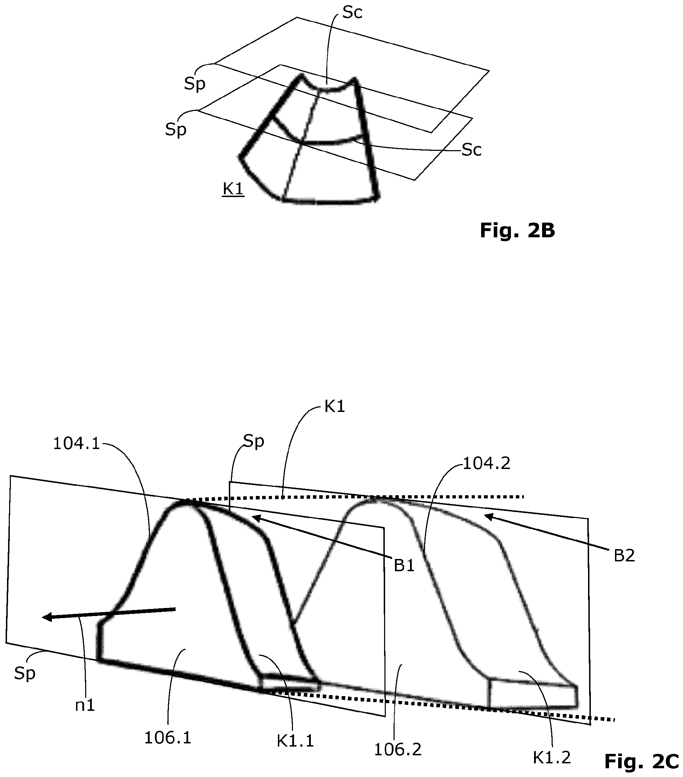

Gemäss Erfindung werden vorzugsweise mehrere Spanflächenlagen Sp (siehe Fig. 2B) entlang der "Zahnbreite" vorgegeben und es werden die Schnittlinien Sc der Spanflächenlagen Sp mit dem konjugierten Zahn K1 ermittelt. In Fig. 2B ist ein Beispiel gezeigt, in dem der virtuelle konjugierte Zahn K1 zur Definition von zwei Schneidzähnen dienen soll. Daher werden in diesem Fall zwei Spanflächenlagen Sp vorgegeben. Auf diesem Wege werden mehrere Schneidkanten des Werkzeugs 100 bestimmt. Um die Schneidkanten im dreidimensionalen Raum frei zu stellen, wird der konjugierte Zahn K1 unterteilt oder segmentiert, indem im virtuellen Modell Material des konjugierten Zahns K1 entfernt wird. Hierbei werden insbesondere auch die Freiflächen an den Schneidzähnen gegenüber dem konjugierten Zahn K1 zurückgenommen, um ausreichende Freiwinkel zu gewährleisten. So ergeben sich nun Schneidkanten und Spanflächen. Diese Schneidkanten können z.B. gleichabständig am Werkzeug 100 (z.B. entlang der Zahnbreite b) verteilt sein.

In Fig. 2C ist ein Beispiel gezeigt, das aus der Fig. 2B abgeleitet wurde. Der konjugierte Zahn K1 der Fig. 2B wurde zertrennt. Auf diesem Wege sind zwei Schneidzähne K1.1 und K1.2 aus dem konjugierten Zahn K1 entstanden. Die beiden Schneidzähne K1.1 und K1.2 sind in Fig. 2C schräg von oben gezeigt (d.h. in Fig. 2C ist eine Ansicht von der vorderen Stirnfläche 114 des Kegelstumpfs her gezeigt), damit man die Spanflächen 106.1 und 106.2 der beiden Schneidzähne K1.1 und K1.2 erkennen kann. In Fig. 2C sind die Schneidkanten mit den Bezugszeichen 104.1 und 104.2 gekennzeichnet. In Fig. 2C ist auch der Normalenvektor n1 der obersten Spanfläche 106.1 des obersten Schneidzahns K1.1 des konjugierten Zahns K1 gezeigt. Die Kontur des konjugierten Zahns K1 ist in Fig. 2C durch zwei gepunktete Linienzüge dargestellt. In den Bereichen B1 und B2 kann man erkennen, dass zum Definieren der Schneidzähne K1.1 und K1.2 Material vor allem auch am Rücken des konjugierten Zahns K1 zurückgenommen wurde, um so ausreichende Freiwinkel bereit zu stellen.

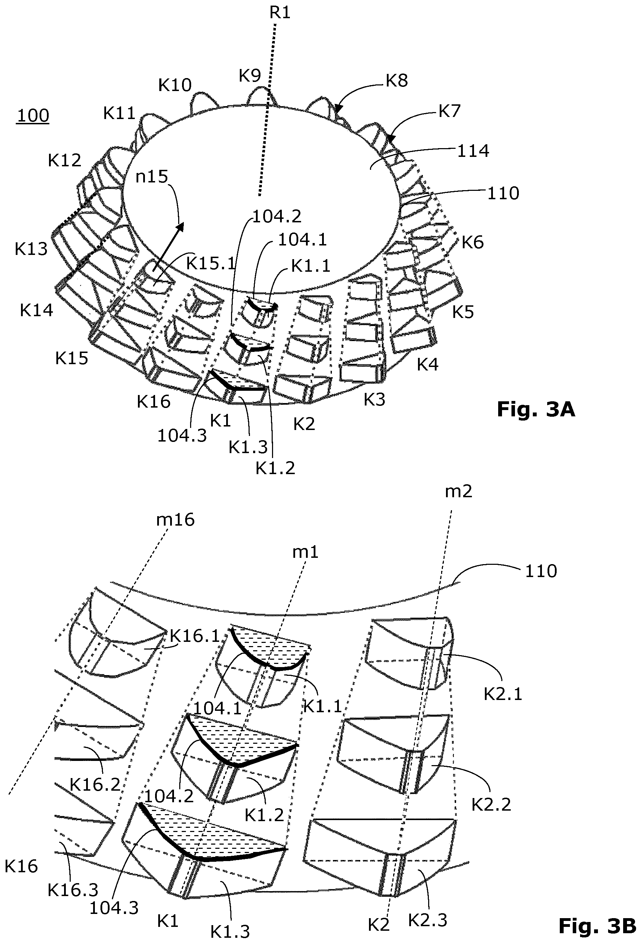

In Fig. 3A ist ein Werkzeug 100 gezeigt, das auf dem Beispiel der Figuren 2A bis 2C aufbaut. An dem beispielhaft gezeigten Wälzschälwerkzeug 100 wurden im Rahmen der Auslegung sechzehn virtuelle konjugierte Zähne K1 bis K16 vorgesehen. Jeder dieser sechzehn Zähne K1 bis K16 wurde in drei Schneidzähne unterteilt, d.h. hier wurden pro konjugiertem Zahn K drei Spanebenen Sp vorgegeben. In Fig. 3A sind die drei Schneidzähne K1.1, K1.2 und K1.3 des konjugierten Zahns K1 mit Bezugszeichen versehen. Um den geometrischen Zusammenhang zwischen den virtuellen konjugierten Zähnen K1 bis K16 und den einzelnen Schneidzähnen (z.B. die Schneidzähne K1.1, K1.2 und K1.3) hervor zu heben, sind in Fig. 3A die Konturlinien der virtuellen konjugierten Zähne K1 bis K16 als gepunktete Linienzüge gezeigt.

Jeder der Schneidzähne nach Fig. 3A beruht somit auf einem Abschnitt eines entsprechenden konjugierten Zahns K. An jedem Schneidzahn (z.B. am Schneidzahn K1.1) ist eine Schneidkante (z.B. am Schneidzahn K1.1 die Schneidkante 104.1) ausgebildet. In Fig. 3A sind die Schneidkanten 104.1, 104.2 und 104.3 durch dicke Linienzüge optisch hervorgehoben. An jedem Schneidzahn ist eine Spanfläche definiert. Die Spanflächen der Schneidzähne K1.1, K1.2, K1.3 sind in Fig. 3A und in Fig. 3B durch ein Muster hervor gehoben, um sie besser erkennbar zu machen. Der Normalenvektor n der Spanflächen steht bei diesem Ausführungsbeispiel leicht schräg zu der Rotationsachse R1 und bildet mit dieser in einer Flächenprojektion einen spitzen Winkel. In Fig. 3A ist der Normalenvektor n15 der obersten Spanfläche des obersten Schneidzahns K15.1 des konjugierten Zahns K15 gezeigt.

Fig. 3B zeigt eine Ausschnittsvergrösserung der Perspektivansicht nach Fig. 3A. In Fig. 3B sind lediglich die Konturen der konjugierten Zähne K1, K2 und K16 sowie die Schneidzähne K1.1, K1.2, K1.3, K2.1, K2.2, K2.3 und K16.1, K16.2, K16.3 zu sehen. Auch in dieser Abbildung sind die drei Schneidkanten 104.1, 104.2 und 104.3 optisch durch dicke Linienzüge hervorgehoben und die Spanflächen der Schneidzähne K1.1, K1.2, K1.3 sind durch ein Muster gekennzeichnet.

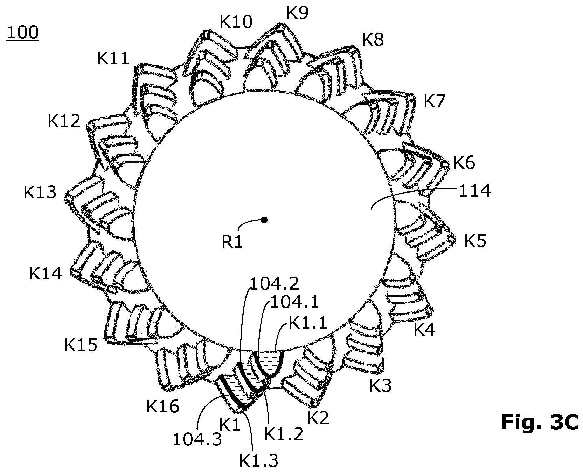

Fig. 3C zeigt eine schematische Draufsicht des Wälzschälwerkzeugs 100 der Fig. 3A, wobei hier nur die Schneidzähne dargestellt sind. Die Konturlinien der virtuellen konjugierten Zähne K1 bis K16 wurden ausgeblendet. Es ist eine Ansicht auf die obere (vordere) Stirnfläche 114 gezeigt. Auch in dieser Abbildung sind die drei Schneidkanten 104.1, 104.2 und 104.3 optisch durch dicke Linienzüge hervorgehoben und die Spanflächen der Schneidzähne K1.1, K1.2, K1.3 sind durch ein Muster gekennzeichnet.

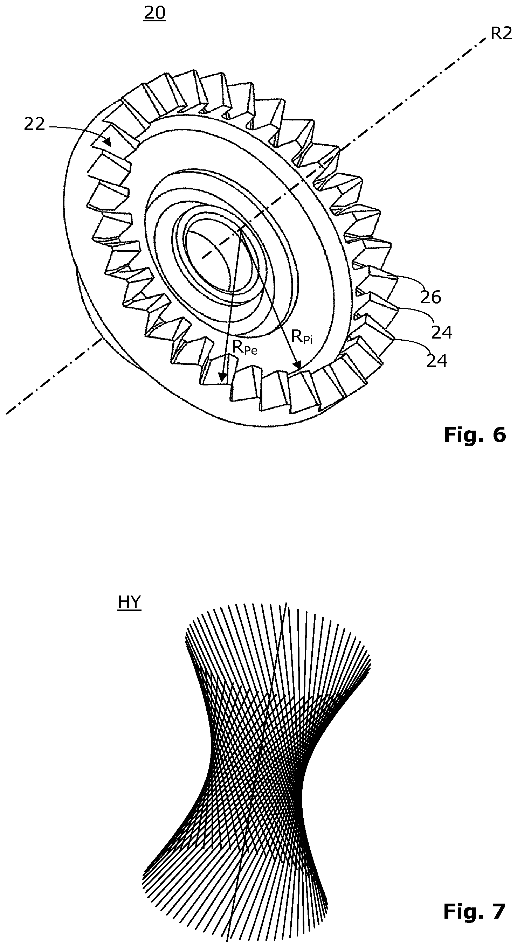

In Fig. 3B sind drei gestrichelte Hilfslinien m1, m2 und m16 eingezeichnet, die dem Verlauf der Flächennormalen der Spanflächen der Schneidzähne folgen. Anhand der Hilfslinien m1, m2, m16 kann man erkennen, dass die Spanflächen des gezeigten Wälzschälwerkzeugs 100 leicht schräg stehen und die Hilfslinien in diesem Fall keinen gemeinsamen Schnittpunkt mit der Werkzeugachse R1 haben. Diese Hilfslinien liegen auf einem Hyperboloid (siehe zum Beispiel Fig. 7). Im Sonderfall eines Werkstücks 20 mit geraden Schneidzähnen entartet das Hyperboloid zu einem Kegel. D.h. in diesem Sonderfall schneiden die Hilfslinien die Rotationsachse R1. Dieser Sonderfall fällt auch in den Schutzumfang der vorliegenden Erfindung.

Bei dem Beispiel nach Fig. 3A bis 3C unterscheiden sich die einzelnen Schneidzähne innerhalb eines jeden virtuellen konjugierten Zahns. So sind z.B. alle drei Schneidzähne K1.1, K1.2, K1.3 des virtuellen konjugierten Zahns K1 unterschiedlich. Der oberste Schneidzahn K1.1 des konjugierten Zahns K1 ist jedoch gleich ausgebildet wie die obersten Schneidzähne aller anderen konjugierten Zähne. Einfach ausgedrückt gilt z.B.: K1.1 = K2.1 = ... = K16.1. Dieses Prinzip gilt nicht nur für die obersten sondern auch für alle anderen Schneidzähne eines Werkzeugs 100 nach dieser Ausführungsform.

Die Form eines solchen Wälzschälwerkzeugs 100 erinnert im weitesten Sinne an einen Tannenzapfen oder ein Teil eines Tannenzapfens.

Durch den Einsatz von mehreren Schneidkanten (z.B. die Schneidkanten 104.1, 104.2, 104.3) über die Zahnbreite b braucht das vorgeschlagene Wälzschälwerkzeug 100 zur Ausbildung einer gesamten Zahnlücke 22 am Werkstück 20 nicht über die gesamte Zahnbreite b hinweg bewegt werden. Je nach relativer Dimension des Wälzschälwerkzeugs 100 zur Grösse des Werkstücks 20, respektive zur Zahnbreite b, kann das Wälzschälen gemäss Erfindung ausgeführt werden ohne dass das Wälzschälwerkzeug 100 in Zahnbreitenrichtung (d.h. entlang der Zahnlücke 22) bewegt werden muss. Es sind aber auch Ausführungsformen möglich, bei denen eine kleine Bewegung des Wälzschälwerkzeugs 100 in Zahnbreitenrichtung erforderlich ist.

Bestimmte Schneidkanten sind für die Bearbeitung bestimmter Bereiche der Verzahnung gedacht. Sind diese Bereiche klein genug (d.h. umso mehr Schneidzähne pro konjugiertem virtuellen Zahn K vorgesehen sind), so sind auch die erzeugten Abweichungen zur Sollgeometrie klein.

Falls das Wälzschälwerkzeug 100 nicht so groß ist und seine Schneidzähne (z.B. die Schneidzähne K1.1, K1.2, K1.3) nicht so positioniert sind, dass ohne Verlagerungsbewegung eine gesamte Zahnlücke 22 erzeugt werden kann, so wird der Rotationsbewegung des Wälzschälwerkzeugs 100 um die Werkzeugachse R1 und der Rotationsbewegung des Werkstücks 20 um die Werkstückachse R2 vorzugsweise eine lineare Verlagerungsbewegung in Zahnbreitenrichtung überlagert. So kann auch mit einem relativ kleinen (im Sinne von dünn) Werkzeug 100 eine grosse (im Sinne von breite) Zahnlücke 22 bearbeitet werden.

Gemäss Erfindung erfolgt das Einstechen des Wälzschälwerkzeugs 100 in das Material des Werkstücks 20 vorzugsweise von oben entlang der Zahnbreite b, mit allen Schneidzähnen gleichzeitig. Anschließend kann ein Bewegungsablauf erfolgen, wie vom Wälzschälen mit Schneidrädern bekannt ist.

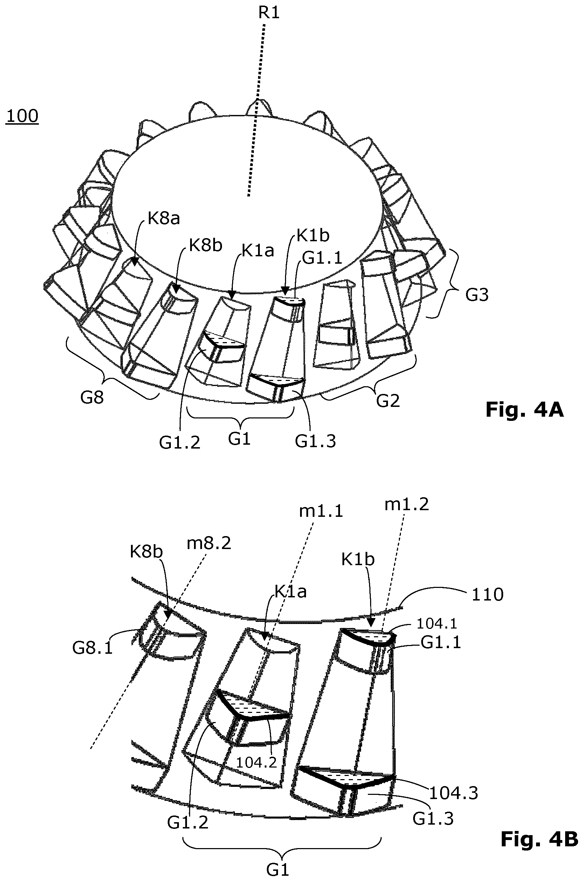

Fig. 4A zeigt eine schematische Perspektivansicht einer zweiten Ausführungsform eines Wälzschälwerkzeugs 100 der Erfindung. Das gezeigte Wälzschälwerkzeug 100 umfasst in Zweiergruppen gruppenweise angeordnete Schneidzähne. Das Wälzschälwerkzeug 100 nach Fig. 4A umfasst insgesamt acht Zweiergruppen G1 bis G8. Vier dieser acht Zweiergruppen sind in Fig. 4A mit den Bezugszeichen G1, G2, G3 und G8 versehen.

Im gezeigten Beispiel baut jede der Zweiergruppen auf zwei benachbarten, konjugierten Zähnen auf, die bei der ersten Gruppe G1 mit K1a und K1b bezeichnet sind. Bei der achten Gruppe G8 sind die konjugierten Zähne mit K8a und K8b bezeichnet. Wie bereits zuvor beschrieben, dienen die konjugierten Zähne zur Herleitung oder Definition der eigentlichen Schneidzähne. Im hier gezeigten Beispiel wird am ersten konjugierten Zahn K1a ein mittlerer Schneidzahn G1.2 definiert. Am zweiten konjugierten Zahn K1b werden ein oberer und ein unterer Schneidzahn G1.1 und G1.3 definiert. Die beiden Schneidzähne G1.1 und G1.3 sitzen versetzt zum mittleren Schneidzahn G1.2. Durch das Zertrennen oder Unterteilen der virtuellen konjugierten Zähne entstehen auch hier Schneidkanten und Spanflächen. Die Spanflächen der Gruppen (z.B. der Gruppe G1) stehen versetzt zueinander.

Fig. 4B zeigt eine Ausschnittsvergrösserung der Perspektivansicht nach Fig. 4A. In Fig. 4B sind lediglich die Konturen der konjugierten Zähne K1a, K1b und K8b sowie die vier Schneidzähne G1.1, G1.2, G1.3, G8.1 zu sehen. Auch in dieser Abbildung sind die drei Schneidkanten 104.1, 104.2 und 104.3 optisch durch dicke Linienzüge hervorgehoben und die Spanflächen der Schneidzähne G1.1, G1.2, G1.3 durch ein Muster gekennzeichnet. Die drei Schneidzähne G1.1, G1.2, G1.3 gehören zu der Gruppe G1 und der einzeln sichtbare Schneidzahn G8.1 gehört zu der Gruppe G8. In der Abbildung Fig. 4B sind die drei Schneidkanten 104.1, 104.2 und 104.3 der Gruppe G1 optisch durch dicke Linienzüge hervorgehoben. Die Spanflächen der Gruppe G1 sind durch ein Muster kenntlich gemacht.

In Fig. 4B sind drei gestrichelte Hilfslinien m1.1, m1.2 und m8.2 eingezeichnet, die dem Verlauf der Spanflächennormalen folgen. Anhand der Hilfslinien m1.1, m1.2 und m8.2 kann man erkennen, dass die Spanflächen des gezeigten Wälzschälwerkzeugs 100 leicht schräg stehen und die Hilfslinien auch in diesem Fall keinen gemeinsamen Schnittpunkt mit der Werkzeugachse R1 haben.

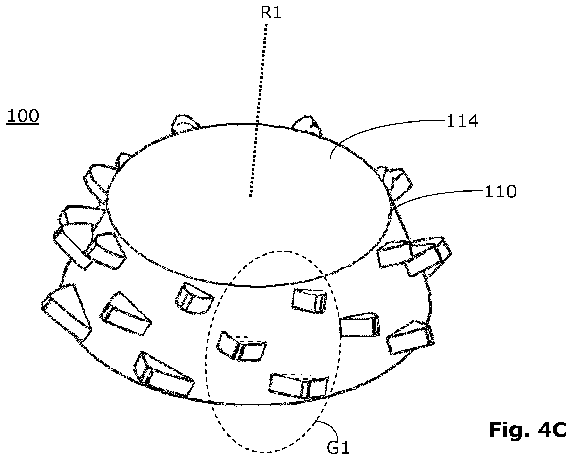

Fig. 4C zeigt eine schematische Perspektivansicht des Wälzschälwerkzeugs 100 der Fig. 4A, wobei hier die einzelnen Schneidzähne und deren Anordnung am Grundkörper 110 gut sichtbar sind. Die Konturlinien der virtuellen konjugierten Zähne K1a bis K8b wurden ausgeblendet.

Bei dem Beispiel nach Fig. 4A bis 4C unterscheiden sich die Schneidzähne der einzelnen virtuellen konjugierten Zähne innerhalb einer Gruppe und die Gruppe wiederholt sich entlang des Umfangs des Wälzschälwerkzeugs 100 mehrfach. So sind z.B. alle drei Schneidzähne G1.1, G1.2, G1.3 der ersten Gruppe G1 unterschiedlich.

Aus dem Beispiel nach Fig. 4A bis 4C kann eine weitere Ausführungsform abgeleitet werden, bei der aus drei benachbarten virtuellen konjugierten Zähnen je nur ein Schneidzahn definiert wird. Alle diese drei Schneidzähne sind untereinander unterschiedlich und stehen auf unterschiedlichen Durchmessern des Grundkörpers 110. Bei dieser Ausführungsform sind jeder Gruppe drei benachbarte virtuelle konjugierte Zähne zuzuordnen. Diese Gruppen wiederholen sich entlang des Umfangs des Wälzschälwerkzeugs 100 mehrfach.

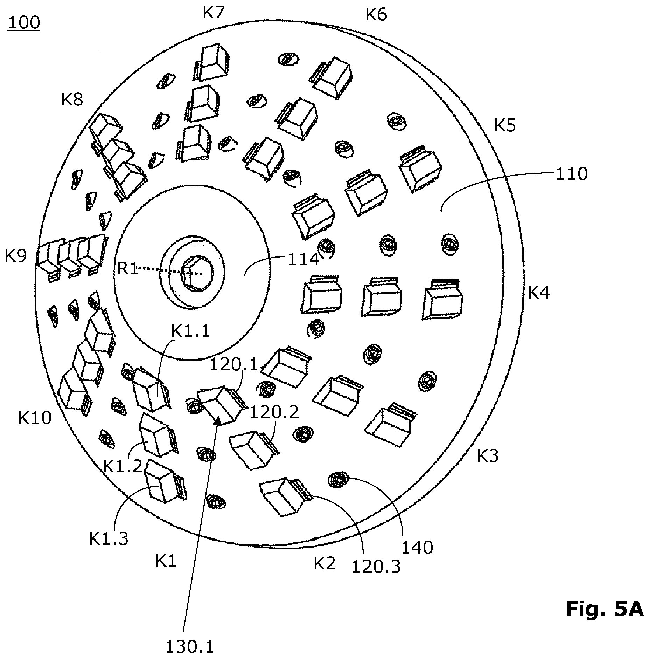

Fig. 5A zeigt eine schematische Perspektivansicht einer dritten Ausführungsform eines Wälzschälwerkzeugs 100 der Erfindung. Das gezeigte Wälzschälwerkzeug 100 ist mit Stabmessern bestückt. Im gezeigten Beispiel ist jeder konjugierte Zahn K1 bis K10 in drei einzelne Zähne zerlegt, wobei jeder dieser einzelnen Zähne durch den Kopfbereich eines entsprechenden Stabmesser realisiert wird. Die drei Zähne K1.1, K1.2, und K1.3 des ersten konjugierten Zahns K1 sind in Fig. 5A mit Bezugszeichen markiert.

Um die Stabmesser in den kegelstumpfförmigen Grundkörper 110 des Wälzschälwerkzeugs 100 einsetzen und dort befestigen zu können, ist in dem Grundkörper 110 pro Stabmesser eine Aufnahmeöffnung vorgesehen. In Fig. 5A sind drei der Aufnahmeöffnungen mit den Bezugszeichen 120.1, 120.2, 120.3 bezeichnet.

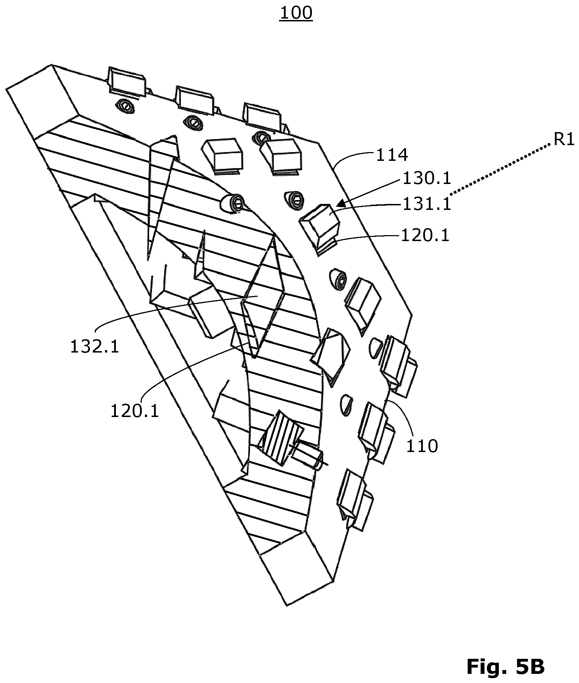

In Fig. 5B ist ein Schnitt dargestellt. Anhand dieser Schnittdarstellung kann man z.B. erkennen, wie sich die Aufnahmeöffnung 120.1 von der Mantelfläche des Kegelstumpfs ins Innere des Grundkörpers 110 erstreckt. Von dem Stabmesser 130.1, das in dieser Aufnahmeöffnung 120.1 sitzt, erkennt man einerseits den Kopfbereich 131.1 und andererseits ein Stück des Schafts 132.1.

In den Figuren 5A und 5B ist angedeutet, dass pro Stabmesser je eine Befestigungsschraube vorgesehen ist. Eine dieser Befestigungsschrauben ist mit dem Bezugszeichen 140 bezeichnet.

Allgemein kann gesagt werden, dass gemäss Erfindung die Spanflächen der Schneidzähne bei bevorzugten Ausführungsformen (wie zum Beispiel in den Figuren 3A bis 5B gezeigt) nach vorne gerichtet sind, d.h. die Spanflächen weisen zu der Kegelspitze (dort wo der Teilkegelwinkel δ des Werkzeugs 100 definiert ist) des kegelstumpfförmigen Grundkörpers 110 des Wälzschälwerkzeugs 100 hin.

Es gibt jedoch auch Ausführungsformen der Erfindung, bei denen die Spanflächen der Schneidzähne nach hinten gerichtet sind, d.h. die Spanflächen weisen von der Kegelspitze weg. Es ist jedoch ein Nachteil dieser Ausführungsformen, dass sich das Bereistellen der Freiflächen weniger einfach gestaltet.

Wenn man die Spanflächennormalen n aller Schneidzähne in Form von Strahlen aufzeichnet, dann kann man erkennen, dass folgende Aussagen zutreffen. Diese Aussagen können auch auf die Orientierung der konjugierten Zähne übertragen werden.
- die Strahlen schneiden sich bei denjenigen Ausführungsformen nicht, die auf einem Hyperboloid aufbauen.
- die Strahlen schneiden bei denjenigen Ausführungsformen die Rotationsachse R1 nicht, die auf einem Hyperboloid aufbauen,
- jeder der Strahlen schließt mit der Rotationsachse R1 in einer Projektion in die Achsebene einen spitzen Winkel ein, der vorzugsweise kleiner ist als 40 Grad.
- Im Sonderfall, bei dem das Hyperboloid zu einem Kegel entartet, schneiden sich die Strahlen mit der Rotationsachse R1 in einem gemeinsamen Schnittpunkt.

Allgemein kann gesagt werden, dass gemäss Erfindung beim achsversetzten Wälzschälen die Werkzeugrotationsachse R1 mit der Werkstückrotationsachse R2 einen Achswinkel Σ bilden (siehe Fig. 1B), für den die folgende Aussagen gelten. Dabei wird von den folgenden Annahmen ausgegangen: 60° < Δ < 120° und 0° < δ < 60°
- der Achswinkel Σ liegt bei einem Werkstück 20 mit einem Kopfkegelwinkel Δ, der kleiner ist als 90 Grad, im Bereich zwischen 60 Grad und 150 Grad,
- der Achswinkel Σ liegt bei einem Werkstück 20 mit einem Kopfkegelwinkel Δ von 90 Grad im Bereich zwischen 90 Grad und 150 Grad,
- der Achswinkel Σ liegt bei einem Werkstück 20 mit einem Kopfkegelwinkel Δ, der grösser ist als 90 Grad, im Bereich zwischen 90 Grad und 180 Grad.

Weiterhin kann allgemein gesagt werden, dass die Schneidzähne der Werkzeuge 100 der Erfindung im Wesentlichen radial aus einer Mantelfläche des Wälzkegelkörpers 110* herausragen.

Weiterhin kann allgemein gesagt werden, dass die Spanflächen der Werkzeuge 100 der Erfindung eine Spanflächennormale n aufweisen, die mit der Werkzeugrotationsachse R1 einen spitzen Winkel einschließen, der kleiner ist als 40 Grad. Vorzugsweise liegt dieser Winkel im Bereich 0 bis 30 Grad, wobei die untere Grenze gleich Null als Sonderfall mit eingeschlossen ist.

In Fig. 6 ist ein beispielhaftes Kronenrad 20 gezeigt, das gemäss Erfindung bearbeitet wurde. Einige der Zähne des Kronenrads 20 sind mit dem Bezugszeichen 24 bezeichnet. Die Zähne 24 erstrecken sich in radialer Richtung und sie sind hier koplanar angeordnet. Der Zahnkopf 26 eines jeden der Zähne 24 verjüngt sich mit zunehmendem radialen Abstand zur Werkstückachse R2.

In Fig. 7 ist ein beispielhaftes Hyperboloid HY gezeigt. Konkret handelt es sich um ein einschaliges Hyperboloid. Anhand von Fig. 7 kann man beispielhaft den Verlauf der Spanflächennormalen erkennen, wobei die Rotationsachse des Hyperboloids HY mit der Rotationsachse R1 zusammenfällt.

| | |
|---|---|
| Werkstück | 20 |
| Zahnlücke | 22 |
| Fuß | 23 |
| Zähne | 24 |
| Zahnkopf | 26 |
| Wälzschälwerkzeug | 100 |
| Schneidzahn | 102 |
| zweiter Schneidzahn | 102.2 |
| Schneid kanten | 104 |
| Erste Schneidkante | 104.1 |
| zweite Schneidkante | 104.2 |
| dritte Schneidkante | 104.3 |
| Spanflächen | 106.1, 106.2 |
| | |
| Grundkörper | 110 |
| Wälzkegelkörper | 110* |
| rückseitige Stirnfläche | 112 |
| vordere Stirnfläche | 114 |
| | |
| Aufnahmeöffnungen | 120.1, 120.2, 102.3 |
| | |
| Stab messer | 130.1 |
| Kopf eines Stabmessers | 131.1 |
| Schaft eines Stabmessers | 132.1 |
| | |
| Befestigungsschrauben | 140 |
| | |
| Achsversetzung | a |
| Auslegungspunkt | A1 |
| 1. Höhe | aᵢ |
| 2. Höhe | aₑ |
| Bereiche | B1, B2 |
| Zahnbreite | b |
| Gruppen | G1 - G12 |
| Hyperboloid | HY |
| konjugierter Zahn | K |
| konjugierter Zahn | K1 bis K16 |
| konjugierte Zähne | K1a, K1b bis K12b |
| erster Schneidzahn des ersten konjugierten Zahns | K1.1 |
| zweiter Schneidzahn des ersten konjugierten Zahns | K1.2 |
| Normalenvektor | n1 |
| Normalenvektor | n16 |
| Teilkegelwinkel des Werkzeugs | δ |
| Kegelwinkel des Werkstücks | Δ |
| gekrümmte Linie | LK |
| Hilfslinien | m1, m2, m3 |
| Hilfslinien | m1.1, m1.2, m12.2 |
| Rotationsachse des Werkzeugs (Werkzeugachse) | R1 |
| Rotationsachse des Werkstücks (Werkstückachse) | R2 |
| Innenradius | R_{Pi} |
| Aussenradius | R_{Pe} |
| Radius im Auslegungspunkt | r_{w0} |
| Radius an Kopfseite | r_{w0i} |
| Radius an Fussseite | r_{w0e} |
| Schnittlinien | Sc |
| Spanflächen | Sp |
| Achswinkel | Σ |
| Wälzebene | WE |

## Patentansprüche

1. Wälzschälwerkzeug (100) zum Herstellen mehrerer Zahnlücken (22) mittels eines Wälzschälverfahrens an einem ring- oder scheibenförmigen Werkstück (20), das eine Werkstückrotationsachse (R2) aufweist, wobei das Wälzschälwerkzeug (100) umfasst:
- eine Werkzeugrotationsachse (R1),
- einen hyperboloidförmigen oder kegelstumpfförmigen Wälzkegelkörper (110*), der rotationssymmetrisch zu der Werkzeugrotationsachse (R1) angeordnet ist,
- mehrere Schneidzähne (K1.1, K1.2, K1.3; G1.1, G1.2, G1.3), die im Wesentlichen radial aus einer Mantelfläche des Wälzkegelkörpers (110*) herausragen,
wobei jeder der Schneidzähne (K1.1, K1.2, K1.3; G1.1, G1.2, G1.3) eine Spanfläche (106.1, 106.2) und mindestens eine Schneidkante (104.1, 104.2) aufweist,
wobei alle Spanflächen (106.1, 106.2) eine Spanflächennormale (n) aufweisen, die mit der Werkzeugrotationsachse (R1) einen spitzen Winkel einschließen, der kleiner ist als 40 Grad, und wobei das Wälzschälwerkzeug (100) zum achsversetzten Wälzschälen des Werkstücks (20) ausgelegt ist und **dadurch gekennzeichnet, dass** das Wälzschälwerkzeug (100) mindestens zwei oder mehr als zwei Schneidzähne (K1.1, K1.2, K1.3; G1.1, G1.2, G1.3) aufweist, die auf unterschiedlichen Durchmessern des Wälzkegelkörpers (110*) angeordnet sind.

2. Wälzschälwerkzeug (100) nach Anspruch 1, **dadurch gekennzeichnet, dass** der spitze Winkel im Bereich 0 bis 30 Grad liegt, wobei die untere Grenze mit eingeschlossen ist.

3. Wälzschälwerkzeug (100) nach Anspruch 1 oder 2, **dadurch gekennzeichnet, dass** beim achsversetzten Wälzschälen die Werkzeugrotationsachse (R1) mit der Werkstückrotationsachse (R2) einen Achswinkel (Σ) bildet,
- wobei der Achswinkel (Σ) bei einem Werkstück (20) mit einem Kopfkegelwinkel (Δ), der kleiner ist als 90 Grad, im Bereich zwischen 60 Grad und 150 Grad liegt,
- wobei der Achswinkel (Σ) bei einem Werkstück (20) mit einem Kopfkegelwinkel (Δ) von 90 Grad im Bereich zwischen 90 Grad und 150 Grad liegt,
- wobei der Achswinkel (Σ) bei einem Werkstück (20) mit einem Kopfkegelwinkel (Δ), der grösser ist als 90 Grad, im Bereich zwischen 90 Grad und 180 Grad liegt.

4. Wälzschälwerkzeug (100) nach Anspruch 1 oder 2, **dadurch gekennzeichnet, dass** an dem Wälzkegelkörper (110*) mindestens ein erster Schneidzahn (K1.1) und ein zweiter Schneidzahn (K1.2) zum Wälzschälen einer gemeinsamen Zahnlücke (22) des Werkstücks (20) vorhanden sind.

5. Wälzschälwerkzeug (100) nach Anspruch 1, 2 oder 3, **dadurch gekennzeichnet, dass** es mehrere Schneidebenen aufweist.

6. Wälzschälwerkzeug (100) nach Anspruch 1 oder 2, **dadurch gekennzeichnet, dass** es Schneidkanten (104.1, 104.2, 104.3) auf unterschiedlichen Durchmessern des Wälzkegelkörpers (110*) aufweist.

7. Wälzschälwerkzeug (100) nach Anspruch 1 oder 2, **dadurch gekennzeichnet, dass** es sich um ein Vollwerkzeug handelt, bei dem die Schneidzähne (K1.1, K1.2, K1.3; G1.1, G1.2, G1.3) und der Grundkörper (100), der aus dem Wälzkegelkörper (110*) abgeleitet wurde, aus einem Material gefertigt sind.

8. Wälzschälwerkzeug (100) nach Anspruch 1 oder 2, **dadurch gekennzeichnet, dass** es sich um ein Messerkopfwerkzeug handelt, bei dem an einem Grundkörper (100), der aus dem Wälzkegelkörper (110*) abgeleitet wurde, Aufnahmebereiche (120.1, 120.2, 120.3) zum Einsetzen und Befestigen von Stabmessern (130.1) vorgesehen sind, und **dadurch gekennzeichnet, dass** das Messerkopfwerkzeug mehrere Stabmesser (130.1) umfasst, die in den jeweiligen Aufnahmebereichen (120.1, 120.2, 120.3) eingesetzt und befestigt sind, wobei jedes der Stabmesser (130.1) einen anderen Schneidzahn (K1.1, K1.2, K1.3; G1.1, G1.2, G1.3) des Wälzschälwerkzeugs (100) bildet.

## Claims

1. A power skiving tool (100) for producing several tooth gaps (22) by means of a power skiving method on a ring- or disk-shaped workpiece (20), which has a workpiece axis of rotation (R2), wherein the power skiving tool (100) comprises:
- a tool axis of rotation (R1),
- a skiving conical body (110*), which is in the form of a hyperboloid or truncated cone, and which is arranged rotationally-symmetrically to the tool axis of rotation (R1),
- several cutting teeth (K1.1, K1.2, K1.3; G1.1, G1.2, G1.3), which protrude essentially radially out of an enclosing surface of the skiving conical body (110*),
wherein each of the cutting teeth (K1.1, K1.2, K1.3; G1.1, G1.2, G1.3) has a rake face (106.1, 106.2) and at least one cutting edge (104.1, 104.2), wherein all rake faces (106.1, 106.2) have a cutting surface normal (n), which encloses an acute angle, which is less than 40°, with the tool axis of rotation (R1), and wherein the power skiving tool (100) is designed for axially-offset power skiving of the workpiece (20), and **characterized in that** it the power skiving tool (100) has at least two or more than two cutting teeth (K1.1, K1.2, K1.3; G1.1, G1.2, G1.3) which are arranged on different diameters of the skiving conical body (110*).

2. The power skiving tool (100) according to claim 1, **characterized in that** the acute angle is in the range of 0 to 30°, wherein the lower limit is included.

3. The power skiving tool (100) according to claim 1 or 2, **characterized in that**, during the axially-offset power skiving, the tool axis of rotation (R1) forms an axis angle (Σ) with the workpiece axis of rotation (R2),
- wherein the axis angle (Σ) is in the range between 60° and 150° in a workpiece (20) having a face angle (Δ), which is less than 90°,
- wherein the axis angle (Σ) is in the range between 90° and 150° in a workpiece (20) having a face angle (Δ) of 90°,
- wherein the axis angle (Σ) is in the range between 90° and 180° in a workpiece (20) having a face angle (Δ), which is greater than 90°.

4. The power skiving tool (100) according to claim 1 or 2, **characterized in that** at least one first cutting tooth (K1.1) and one second cutting tooth (K1.2) for power skiving a shared tooth gap (22) of the workpiece (20) are provided on the skiving conical body (110*).

5. The power skiving tool (100) according to claim 1, 2, or 3, **characterized in that** it has multiple cutting levels.

6. The power skiving tool (100) according to claim 1 or 2, **characterized in that** it has cutting edges (104.1, 104.2, 104.3) on different diameters of the skiving conical body (110*).

7. The power skiving tool (100) according to claim 1 or 2, **characterized in that** it is a solid tool, in which the cutting teeth (K1.1, K1.2, K1.3; G1.1, G1.2, G1.3) and the main body (100), which was derived from the skiving conical body (110*), are manufactured from one material.

8. The power skiving tool (100) according to claim 1 or 2, **characterized in that** it is a cutter head tool, in which, on a main body (100), which was derived from the skiving conical body (110*), receptacle regions (120.1, 120.2, 120.3) for inserting and fastening bar cutters (130.1) are provided, and **characterized in that** the cutter head tool comprises multiple bar cutters (130.1), which are inserted and fastened in the respective receptacle regions (120.1, 120.2, 120.3), wherein each of the bar cutters (130.1) forms another cutting tooth (K1.1, K1.2, K1.3; G1.1, G1.2, G1.3) of the power skiving tool (100).

## Revendications

1. Outil de taillage en développante (100) pour fabriquer plusieurs entredents (22) à l'aide d'un procédé de taillage en développante sur une pièce de forme circulaire ou de disque (20) qui présente un axe de rotation de pièce (R2), l'outil de taillage en développante (100) comprenant :
- un axe de rotation d'outil (R1),
- un corps conique de taillage en développante de forme hyperboloïde ou en forme de cône tronqué (110*) qui est agencé symétrique en rotation par rapport à l'axe de rotation d'outil (R1),
- plusieurs dents coupantes (K1.1, K1.2, K1.3 ; G1.1, G1.2, G1.3) qui dépassent essentiellement radialement d'une surface d'enveloppe du corps conique de taillage en développante (110*),
chacune des dents coupantes (K1.1, K1.2, K1.3 ; G1.1, G1.2, G1.3) présentant une face de coupe (106.1, 106.2) et au moins une arrête tranchante (104.1, 104.2),
toutes les faces de coupe (106.1, 106.2) présentant une normale de faces de coupe (n) qui forme avec l'axe de rotation d'outil (R1) un angle aigu inférieur à 40 degrés, et l'outil de taillage en développante (100) étant conçu pour tailler la pièce (20) en développante de façon décalée axialement, et
**caractérisé en ce que** l'outil de taillage en développante (100) présente au moins deux dents coupantes (K1.1, K1.2, K1.3 ; G1.1, G1.2, G1.3) ou plus qui sont agencées sur des diamètres différents du corps conique de taillage en développante (110*).

2. Outil de taillage en développante (100) selon la revendication 1, **caractérisé en ce que** l'angle aigu est compris entre 0 et 30 degrés, la limite inférieure étant également comprise.

3. Outil de taillage en développante (100) selon la revendication 1 ou 2, **caractérisé en ce que** lors du taillage en développante décalé axialement, l'axe de rotation d'outil (R1) forme avec l'axe de rotation de la pièce (R2) un angle des axes (Σ),
- l'angle des axes (Σ), sur une pièce (20) avec un angle de cône de tête (Δ) inférieur à 90 degrés, étant compris entre 60 degrés et 150 degrés,
- l'angle des axes (Σ), sur une pièce (20) avec un angle de cône de tête (Δ) de 90 degrés, étant compris entre 90 degrés et 150 degrés,
- l'angle des axes (Σ), sur une pièce (20) avec un angle de cône de tête (Δ) supérieur à 90 degrés, étant compris entre 90 degrés et 180 degrés.

4. Outil de taillage en développante (100) selon la revendication 1 ou 2, **caractérisé en ce qu'**il y a sur le corps conique de taillage en développante (110*) au moins une première dent coupante (K1.1) et une deuxième dent coupante (K1.2) pour tailler en développante un entredent commun (22) de la pièce (20).

5. Outil de taillage en développante (100) selon la revendication 1, 2 ou 3, **caractérisé en ce qu'**il présente plusieurs plans de coupe.

6. Outil de taillage en développante (100) selon la revendication 1 ou 2, **caractérisé en ce qu'**il présente des arêtes tranchantes (104.1, 104.2, 104.3) sur différents diamètres du corps conique de taillage en développante (110*).

7. Outil de taillage en développante (100) selon la revendication 1 ou 2, **caractérisé en ce qu'**il s'agit d'un outil complet sur lequel on fabrique à partir d'un matériau les dents coupantes (K1.1, K1.2, K1.3 ; G1.1, G1.2, G1.3) et le corps de base (100) qui a été dérivé du corps conique de taillage en développante (110*).

8. Outil de taillage en développante (100) selon la revendication 1 ou 2, **caractérisé en ce qu'**il s'agit d'un outil de tête porte-lames sur lequel, sur un corps de base (100) qui a été dérivé d'un corps conique de taillage en développante (110*), il est prévu des zones de réception (120.1, 120.2, 120.3) pour insérer et fixer des lames de coupe (130.1), et **caractérisé en ce que** l'outil de tête porte-lames comprend plusieurs lames de coupe (130.1), qui sont insérées et fixées dans les différentes zones de réception (120.1, 120.2, 120.3), chacune des lames de coupe (130.1) formant une autre dent coupante (K1.1, K1.2, K1.3 ; G1.1, G1.2, G1.3) de l'outil de taillage en développante.
